# EUROPEAN PATENT APPLICATION

(11) **EP 3 657 014 A1**
(43) Date of publication of application: **27.05.2020**
(21) Application number: 18290133.0
(22) Date of filing: 20.11.2018
(51) Int. Cl.: F03D 13/20, E04H 12/12

(54) **TRANSITION ELEMENT FOR CONNECTING A NACELLE TO A CONCRETE TOWER OF A WIND TURBINE**

(71) Applicant: Holcim Technology Ltd, 8645 Jona (CH)
(72) Inventor: Corvez, Dominique, 5113 Holderbank (CH); Dobrusky, Svatopluk, 5113 Holderbank (CH)
(74) Representative: Keschmann, Marc

(57) **Abstract**

In a transition element for connecting a nacelle to a concrete tower of a wind turbine, comprising an upper flange for supporting the nacelle, a lower flange for connecting the transition element with the concrete tower and a tubular body connecting the lower flange with the upper flange, the lower flange and the tubular body are made of reinforced concrete and the upper flange is at least partially made of reinforced concrete.

## Description

The invention refers to a transition element for connecting a nacelle to a concrete tower of a wind turbine, comprising an upper flange for supporting the nacelle, a lower flange for connecting the transition element with the concrete tower and a tubular body connecting the lower flange with the upper flange.

Further, the invention refers to a method of constructing a wind turbine.

The wind industry tries to increase the height of towers, in order to deploy bigger turbines and to harvest more energy. The traditional solution, tubular steel towers erected by stacking the tubes on top of each other, does not allow to exceed a certain height of the tower due to transportation, welding and fatigue issues. This is the reason why the wind industry started to explore other alternatives, such as concrete towers. Indeed, concrete towers proved to be an efficient solution for high hub heights and many such towers have already been erected.

The main operational parts of wind turbines are usually assembled on top of a wind turbine tower and comprise a nacelle and a hub with rotor blades. Inside the nacelle electric components are arranged that convert the rotational energy of the rotor into electrical energy. The electric components inside the nacelle, in particular a generator and a drivetrain connecting the hub with such generator, have a very substantial weight. Further, the nacelle comprises a yaw system that rotates the nacelle of the wind turbine against the stationary tower, in order to adjust the orientation of the wind turbine rotor towards the wind. One of the main components of the yaw system is the yaw bearing, which comprises a bearing ring and/or a gear rim that is mounted on top of the tower.

The transition between the tower and the nacelle must be provided by a structural piece that transmits the aerodynamic and gravitational loads of the wind turbine from the rotor to the tower. With steel towers, the nacelle can be directly mounted to the steel tower by means of suitable connecting flanges and bolts. However, since nacelles of wind turbines are designed to be mounted on steel towers, the bottom part of the nacelle is usually not compatible to be mounted on concrete towers. Consequently, concrete towers require a transition element made of steel, which creates a link between the concrete tower and a nacelle designed for a steel tower. The transition element is a short tower segment placed on top of the tower for supporting the nacelle and usually has a height of 1 to 3 m.

Such a transition element causes various problems, since steel is not always available. Concrete towers can be produced in a precast factory, precast in-situ or fully cast in-situ. The transition element made of steel, however, does not have this potential. Further, steel industry does not overlap geographically with concrete industry so that the procurement of steel elements poses logistical problems.

Therefore, the invention aims at overcoming the above drawbacks.

In order to solve these and other objects, the invention provides a transition element for connecting a nacelle to a concrete tower of a wind turbine, comprising an upper flange for supporting the nacelle, a lower flange for connecting the transition element with the concrete tower and a tubular body connecting the lower flange with the upper flange, wherein the transition element is characterized in that the lower flange and the tubular body are made of reinforced concrete and the upper flange is at least partially made of reinforced concrete.

By having the entire transition element or at least the main parts thereof made from reinforced concrete, the whole tower, including the transition element, can be produced essentially from the same material. This is true particularly, when the tower itself is made of reinforced concrete, such as ultra-high performance concrete that is reinforced by fibers. From a logistical and economical point of view the invention results in that the whole tower can be produced by one contractor. Further, the tower, including the transition element, can be produced in remote areas, where transportation conditions would not allow steel elements to be transported to.

Because the transition element completely or at least mainly does without the use of steel, the invention mitigates the cost of steel and enables better cost efficiency of the whole system.

While the lower flange and the tubular body of the transition element are entirely made of reinforced concrete, the upper flange may partially be made of a different material. Preferably, the upper flange comprises a supporting ring made of metal, in particular steel, for supporting the nacelle, said supporting ring being mounted to a mounting flange made of reinforced concrete. Thus, the upper flange comprises two elements, the mounting flange made of reinforced concrete and the supporting ring made of metal. The supporting ring may be mounted to the mounting flange by means of screw connections or by means of bolts. The supporting ring made of metal provides the required flatness of the surface, on which the nacelle, in particular the bearing ring or the gear rim of the yaw system, lies. In this way, local stress concentration in the concrete of the transition element are safely avoided.

Preferably, the transition element, in particular in its upper region, such as in the region of the mounting flange, comprises an axial section that tapers in an upward direction, wherein the outer diameter of the transition element is preferably continuously reducing, so as to obtain an adjustment of the upper flange dimension to requirements of the nacelle.

Preferably, the mounting flange, the tubular body and the lower flange are integrally formed as a single piece made of reinforced concrete, the single piece of reinforced concrete preferably being formed as a precast concrete element. This allows for a production of the transition element in a precast factory.

Alternatively, the entire transition element, including the lower flange, the tubular body and the upper flange, is integrally formed as a single piece made of reinforced concrete, the single piece of reinforced concrete preferably being formed as a precast concrete element. Hence, a separate supporting ring made of metal can be avoided.

Preferably, the lower flange is designed as an annular flange radially extending to the inner side of the transition element and having a plurality of bores for receiving tensioning members for prestressing the concrete tower. In this way, the concrete tower is prestressed between the transition element and the foundation and at the same time the transition element is safely fixed to the tower. Additional connecting means may be provided for connecting the transition element to the tower, such as form-fit elements integrally formed in the concrete or connecting bolts.

Preferably, the upper flange, in particular the mounting flange, is designed as an annular flange radially extending to the inner side of the transition element and having a plurality of bores for receiving anchor bolts for connecting the upper flange with the nacelle.

The precise position of the bores is crucial as the bores must align with mounting holes of the nacelle. According to a preferred embodiment, a pre-assembled reinforcing cage is embedded into the concrete of the upper flange or the mounting flange, said reinforcing cage defining the position of the plurality of said bores. In this way, the position of the bores can be defined with a high precision.

The term "concrete" as used herein is understood to define a mixture of a hydraulic binder (e.g. cement), aggregate, water, optionally additives, and optionally mineral additions.

As to the type of reinforced concrete that is used for producing the transition element, a preferred embodiment provides that the reinforced concrete is a high performance concrete (HPC) having a 28d compressive strength of > 80 MPa.

The HPC concrete may generally have a water/cement ratio (W/C) of up to 0.50, preferably at most 0.40, for example 0.15 to 0.40, more preferably from 0.20 to 0.35.

The HPC concrete may be a concrete containing silica fume.

The HPC concrete generally has a porosity to water of less than 20%, preferably less than 15%, for example less than 13% (determined by the method described in the report "Journées Techniques", AFPC-AFREM, December 1997, pages 121 to 124).

The high performance concrete preferably comprises, in parts by weight:
- 100 parts of Portland cement;
- 50 to 250 parts of a sand having a single grading with a D10 to a D90 of 0.063 to 5 mm, or a mixture of sands, the finest sand having a D10 to a D90 of 0.063 to 1 mm and the coarsest sand having a D10 to a D90 of 1 to 5 mm, for example between 1 and 4 mm;
- 50 to 200 parts of a sand having a single grading with a D10 to a D90 of 3 to 6 mm;
- 0 to 60 parts of a pozzolanic or non-pozzolanic material of particles or a mixture thereof having a mean particle size less than 15 µm;
- 0.1 to 10 parts of a water-reducing superplasticizer; and
- 15 to 40 parts of water.

According to a preferred embodiment of the invention, the concrete is a ultra-high performance concrete (UHPC) having a 28d compressive strength of > 100 MPa.

The UHPC concrete may generally have a water/cement ratio (W/C) of up to 0.50, preferably at most 0.32, for example 0.10 to 0.32, more preferably from 0.20 to 0.27.

The UHPC concrete may be a concrete containing silica fume.

The UHPC concrete generally has a porosity to water of less than 15%, preferably less than 12%, for example less than 10% (determined by the method described in the report "Journées Techniques", AFPC-AFREM, December 1997, pages 121 to 124).

A ultra-high performance concrete is a particular type of high-performance concrete and generally has a resistance to compression at 28 days greater than 100 MPa and preferably greater than 120 MPa. The concrete used in the transition element of the instant invention preferably is a ultra-high performance concrete as described in US 6478867, US 6723162, EP 1958926 or EP 2072481.

The ultra-high performance concrete preferably comprises, in parts by weight:
- 100 parts of Portland cement;
- 50 to 200 parts of a sand having a single grading with a D10 to a D90 of 0.063 to 5 mm, or a mixture of sands, the finest sand having a D10 to a D90 of 0.063 to 1 mm and the coarsest sand having a D10 to a D90 of 1 to 5 mm, for example between 1 and 4 mm;
- 0 to 70 parts of a pozzolanic or non-pozzolanic material of particles or a mixture thereof having a mean particle size less than 15 µm;
- 0.1 to 10 parts of a water-reducing superplasticizer; and
- 10 to 32 parts of water.

The sand is generally a silica or limestone sand, calcined bauxite or particles of metallurgical residues, and may also comprise a ground dense mineral material, for example a ground vitrified slag. Preferably, a mixture of sands (preferably of two sands) is provided, the finest sand having a D10 to a D90 from 0.063 to 1 mm and the coarsest sand having a D10 to a D90 from 1 to 5 mm. The concrete according to the invention is preferably a self-placing concrete. It preferably has a Vicat setting time of 2 to 18 hours, for example 4 to 14 hours.

The high and ultra-high performance concretes generally exhibit a greater shrinkage on setting because of their higher cement content. The total shrinkage may be reduced by the inclusion of, in general from 2 to 8 parts, preferably from 3 to 5 parts, for example approximately 4 parts, of quicklime, overburnt lime or calcium oxide per 100 parts of the mixture before the addition of water.

Suitable pozzolanic materials comprise silica fume, also known under the name of microsilica, which is a by-product of the production of silicon or ferrosilicon alloys. It is known as a reactive pozzolanic material. Another suitable pozzolanic material is slag, used alone or in combination with silica fume.

Its principal constituent is amorphous silicon dioxide. The individual particles generally have a size of approximately 5 to 10 nm. The individual particles agglomerate to former agglomerates of 0.1 to 1 µm, and then can aggregate together in aggregates of 20 to 30 µm. Silica fume generally has a specific surface area BET of 10 to 30 m²/g.

Other pozzolanic materials comprise materials rich in aluminosilicate such as metakaolin and natural pozzolans having volcanic, sedimentary or diagenetic origins.

Suitable non-pozzolanic materials also comprise materials containing calcium carbonate (for example ground or precipitated), preferably a ground calcium carbonate. The ground calcium carbonate may for example be Durcal® 1 (OMYA, France).

The non-pozzolanic materials preferably have a mean particle size of less than about 10 µm, preferably less than about 5 µm, for example of 1 to 4 µm. The non-pozzolanic material may be ground quartz, for example C800 which is a substantially non-pozzolanic silica filler material supplied by Sifraco, France.

The preferred specific surface area BET (determined by known methods) of the calcium carbonate or of the ground quartz is generally from 2 to 10 m²/g, generally less than 8 m²/g, for example 4 to 7 m²/g, preferably less than 6 m²/g.

Precipitated calcium carbonate is also suitable as non-pozzolanic material. The individual particles generally have a (primary) size of the order of 20 nm. The individual particles agglomerate in aggregates having a (secondary) size of approximately 0.1 to 1 µm. The aggregates themselves form clusters having a (ternary) size greater than 1 µm.

A single non-pozzolanic material or a mixture of non-pozzolanic materials may be used, for example ground calcium carbonate, ground quartz or precipitated calcium carbonate or a mixture thereof. A mixture of pozzolanic materials or a mixture of pozzolanic and non-pozzolanic materials may also be used.

The high performance concrete is reinforced by reinforcing elements, for example metal and/or organic fibers and/or glass fibers and/or other reinforcing elements for example as described below.

The concrete used in the transition element of the invention may comprise metal fibers and/or organic fibers and/or glass fibers. The quantity by volume of fibers is generally from 0.5 to 8% relative to the volume of the hardened concrete. The quantity of metal fibers, expressed in terms of volume of the final hardened concrete is generally less than 4%, for example from 0.5 to 3.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (l) of the metal fibers is generally at least 2 mm and is preferably 10 to 30 mm. The ratio l/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus non-reactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

According to a second aspect of the invention, a method of constructing a wind turbine is provided, comprising the steps of:
a) erecting a concrete tower on a foundation by arranging precast concrete elements on top of each other,
b) arranging a transition element on top of the concrete tower,
c) connecting a nacelle to the transition element.

Preferably, step b) comprises prestressing the precast concrete elements by means of tensioning members, such as tensioning strands, extending in the longitudinal direction of the tower, said tensioning members, on one end thereof, being fixed to the lower flange of the transition element and, on the other end thereof, being fixed to the foundation.

Preferably, step c) comprises arranging the nacelle on the supporting ring of the transition element and mounting the nacelle to the transition element by means of anchor bolts traversing the bores of the mounting flange of the transition element.

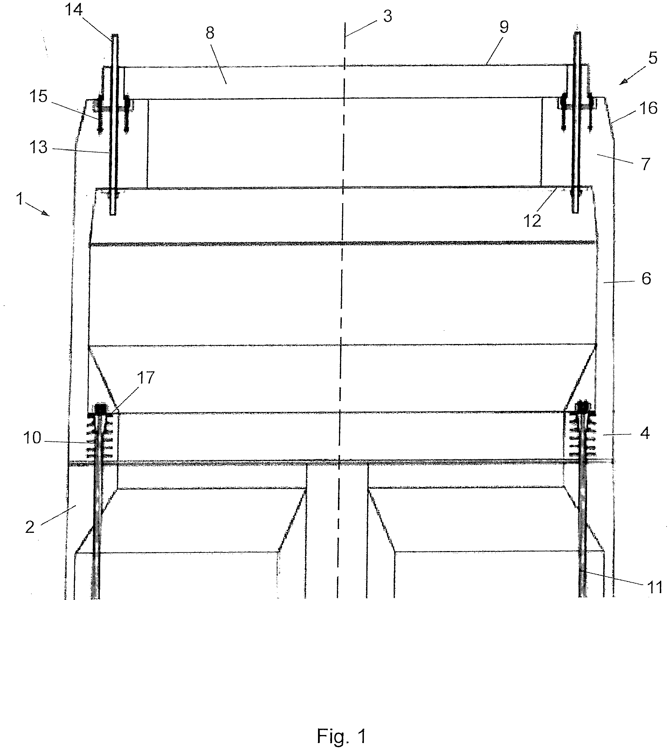

The invention will now be described in more detail with reference to Fig. 1.

Fig. 1 shows a transition element 1 that is connected to a concrete tower 2 of a wind turbine. The transition element 1 and the tower 2 are arranged co-axially and thus have the same axis 3. The transition element 1 comprises a lower flange 4, an upper flange 5 and a tubular body 6 that connects the lower flange 4 with the upper flange 5. The upper flange 5 comprises a mounting flange 7 that is integrally formed in one piece with the tubular body 6 and the lower flange 4. Said piece is made of reinforced concrete, such as UHPC concrete. Further, the upper flange 5 comprises a supporting ring 8 made of steel that provides a supporting surface 9 for a nacelle, in particular for a bearing ring or a rim gear of a nacelle. The supporting ring 8 is mounted to the mounting flange 7 by means of screws 15.

The lower flange is comprises an annular flange 17 radially extending to the inner side of the transition element 1 and having a plurality of bores 10 for receiving tensioning strands 11 for prestressing the concrete tower 2.

The mounting flange 7 comprises an annular flange 12 radially extending to the inner side of the transition element and having a plurality of bores 13 for receiving anchor bolts 14 for connecting the upper flange 5 with the nacelle (not shown).

Further, the mounting flange 7, in its upper section 16, tapers in an upward direction so that its outer diameter is adjusted to the requirements of the supporting ring 9 and the nacelle.

## Claims

1. Transition element for connecting a nacelle to a concrete tower of a wind turbine, comprising an upper flange for supporting the nacelle, a lower flange for connecting the transition element with the concrete tower and a tubular body connecting the lower flange with the upper flange, wherein the lower flange and the tubular body are made of reinforced concrete and the upper flange is at least partially made of reinforced concrete.

2. Transition element according to claim 1, wherein the upper flange comprises a supporting ring made of metal, in particular steel, for supporting the nacelle, said supporting ring being mounted to a mounting flange made of reinforced concrete.

3. Transition element according to claim 2, wherein the mounting flange, the tubular body and the lower flange are integrally formed as a single piece made of reinforced concrete, the single piece of reinforced concrete preferably being formed as a precast concrete element.

4. Transition element according to any one of claims 1 to 3, wherein the lower flange is designed as an annular flange radially extending to the inner side of the transition element and having a plurality of bores for receiving tensioning members for prestressing the concrete tower.

5. Transition element according to any one of claims 1 to 4, wherein the upper flange, in particular the mounting flange, is designed as an annular flange radially extending to the inner side of the transition element and having a plurality of bores for receiving anchor bolts for connecting the upper flange with the nacelle.

6. Transition element according to claim 5, wherein a pre-assembled reinforcing cage is embedded into the concrete of the upper flange or the mounting flange, said reinforcing cage defining the position of the plurality of said bores.

7. Transition element according to any one of claims 1 to 6, wherein the reinforced concrete is a high performance concrete (HPC) having a 28d compressive strength of > 80 MPa.

8. Transition element according to any one of claims 1 to 7, wherein the concrete is a ultra-high performance concrete (UHPC) having a 28d compressive strength of > 100 MPa.

9. Transition element according to any one of claims 1 to 8, wherein the concrete comprises metal fibers and/or organic fibers and/or glass fibers.

10. Method of constructing a wind turbine, comprising the steps of:
a) erecting a concrete tower on a foundation by arranging precast concrete elements on top of each other,
b) arranging a transition element according to any one of claims 1 to 9 on top of the concrete tower,
c) connecting a nacelle to the transition element.

11. Method according to claim 10, wherein step b) comprises prestressing the precast concrete elements by means of tensioning members, such as tensioning strands, extending in the longitudinal direction of the tower, said tensioning members, on one end thereof, being fixed to the lower flange of the transition element and, on the other end thereof, being fixed to the foundation.

12. Method according to claim 10 or 11, wherein step c) comprises arranging the nacelle on the supporting ring of the transition element and mounting the nacelle to the transition element by means of anchor bolts traversing the bores of the mounting flange of the transition element.

13. Use of a transition element according to any one of claims 1 to 9 for connecting a nacelle to a concrete tower of a wind turbine.
